# EUROPEAN PATENT APPLICATION

(11) **EP 1 452 672 A1**
(43) Date of publication of application: **01.09.2004**
(21) Application number: 04004228.5
(22) Date of filing: 25.02.2004
(51) Int. Cl.: E05B 17/10, E05B 65/20

(54) **Door opening/closing device for vehicle**

(30) Priority: 26.02.2003 JP 2003049577
(71) Applicant: Aisin Seiki Kabushiki Kaisha, Kariya-shi, Aichi-ken, 448-8650 (JP)
(72) Inventor: Murakami, Yuichi, Chiryu-shi Aichi-ken (JP); Ieda, Kiyokazu, Chiryu-shi Aichi-ken (JP); Ito, Takeshi, Chiryu-shi Aichi-ken (JP); Ueda, Masahiro, Nagoya-shi Aichi-ken (JP); Mushiake, Eiji, Chita-gun Aichi-ken (JP); Inaba, Hisashi, Kariya-shi Aichi-ken (JP)
(74) Representative: Böckelen, Rainer

(57) **Abstract**

A door opening/closing device for vehicle including a controlling means (20) for controlling a vehicle door locking or unlocking operation by confirming a user's intent for locking or unlocking operation of the vehicle door includes a handle frame (14) provided at the vehicle door (10), a handle member (12) provided outside of the vehicle door (10) and supported by the handle frame (14) for operating opening or closing of the vehicle door, a handle cap (13) provided outside the vehicle door (10) and supported with the handle frame (14), a light decorative member (29) provided at the handle cap (13), a luminous member (54) accommodated in the handle frame (14) and activated by the controlling means (20) in response to the locking or unlocking condition of the vehicle door, and a light guiding means (31) connecting the light decorative member (29) and the luminous member (54).

## Description

### FIELD OF THE INVENTION

The present invention generally relates to a vehicle door opening/closing device. More particularly, the present invention relates to a device which recognizes a user's intent for locking or unlocking operation of a vehicle door, and controls the locking or unlocking operation of the vehicle door.

### BACKGROUND OF THE INVENTION

A known door opening/closing device for controlling a vehicle door locking or unlocking operation is disclosed in a Japanese Patent Laid-Open Publication No. H5(1993)-106376. In the disclosed door opening/closing device, a portable unit taken by a user (commonly driver) includes a primary receiving means for receiving a transmission request signal and a primary transmitting means for transmitting a response signal according to receiving of the transmission request signal. Accordingly, a device placed in the vehicle body (in-vehicle unit) transmits the transmission request signal from a secondary transmitting means at regular intervals.

On the other hand, the other type of a known door opening/closing device for a vehicle is disclosed in a Japanese Patent Laid-Open Publication No. H10(1998)-227161. In this type, an ID code (registration code) is given to response signal of a portable device. A device equipped in the vehicle body (in-vehicle unit) includes a transmitting antenna for transmitting an electric wave toward outside of the vehicle and a receiving antenna for receiving the electric wave from outside of the vehicle. When the transmission request signal is transmitted from the transmitting antenna and it received by portable device, the portable device transmits a response signal including an ID code. The in-vehicle unit receives the response signal by the receiving antenna. Then, the in-vehicle unit processes opening operation of the vehicle door and the like when the in-vehicle device detects the agreement of the ID code.

In above two disclosed art, it have not been considered that the difference of the door locking/unlocking condition is recognized by the user. Some means to assist the recognition of the door locking/unlocking condition has been desired for the actual use.

To meet the need, an idea is disclosed in a Japanese Patent Laid-Open Publication No. 2000-45593. When the vehicle door is locked or unlocked, the system informs a user of locking or unlocking condition using a buzzer sound or illuminating an interior illumination, where the buzzer sound volume or lighting of the interior illumination is controlled according to the photometer measuring lightness outside of the vehicle. However, the user has an inclination to miss to recognize the buzzer sound while the loud ambient noise. In addition, the visibility of the interior illumination is not enough. It is assumable that the user does not recognize whether locking or unlocking of the vehicle door is securely operated.

According to a German Patent Laid-Open No. 10060780A1, disclosed is a handle member of an outside handle (a handle lever for a vehicle), wherein a portion of the outside handle is made of transparent or translucent material and a light source is provided at inside of the outside handle. When this outside handle is applied to assist the recognition of the door locking or unlocking operation for a user, the reliability for the door locking or unlocking recognition is improved since the handle member comes into view easy at opening or closing the vehicle door.

However, since the handle member is frequently handled by the user, with increasing flaws or stain on the portion of the transparent or translucent material, the intensity of light may be insufficient to be recognized by a user. In addition, the handle member held by the user shaped that the light source is positioned in the cavity of the handle member or in the transparent or translucent solid. The structure must be designed with considering durability.

### SUMMARY OF THE INVENTION

In light of foregoing, according to an aspect of the present invention, a door opening/closing device for vehicle including a controlling means for controlling a vehicle door locking or unlocking operation by detecting a user's intent for locking or unlocking operation of the vehicle door, includes a handle frame disposed at the vehicle door, a handle member disposed at outside of the vehicle door and supported by the handle frame for operating opening or closing of the vehicle door, a handle cap disposed at outside the vehicle door and supported with the handle frame, a light decorative member disposed at the handle cap, a luminous member disposed at the handle frame and activated by the controlling means in response to the locking or unlocking condition of the vehicle door and emitted light, and a light guiding means disposed between the light decorative member and the luminous member and conducted the light activated by the controlling means from the luminous member to the light decorate member.

It is preferable that a detecting means included in the controlling means for detecting a portable unit by communicating with the portable unit wherein the controlling means detects the user's intent for unlocking the vehicle door in response to the operation of the handle member by the user under a recognized condition that the portable unit approaches to the vehicle from outside of a vehicle compartment, and detects the user's intent for locking the vehicle door in response to the operation of the handle member under a recognized condition that the portable unit moves away from the inside of the vehicle compartment to outside of the vehicle.

It is preferable that a door opening/closing device for a vehicle includes a sensor electrode disposed in the handle member for detecting a touch of a user's body, wherein the controlling means detects the operation of the handle member with a condition that the sensor electrode detects the touching of a human body.

It is preferable that a door opening/dosing device for a vehicle includes an operation switch disposed at the handle member, wherein the controlling means detects the operation of the handle member based on an operation of the operation switch.

It is preferable that the controlling means continuously activates the luminous member when the controlling means detects one of the detecting of the user's intent for locking and the locking of the vehicle door, and intermittently activates the luminous member when the controlling means detects the other of the detecting of the user's intent for locking and the locking of the vehicle door.

It is preferable that the controlling means continuously activates the luminous member when the controlling means detects one of the detecting of an approach of the portable unit from outside of the vehicle and the unlocking of the vehicle door, and wherein the controlling means intermittently activates the luminous member when the controlling means detects the other of the detecting of the approach of the portable unit from outside of the vehicle and the unlocking of the vehicle door.

It is preferable that the controlling means continuously activates the luminous member when the controlling means detects one of the detecting of an movement of the portable unit from inside of the vehicle compartment to outside of the vehicle and the locking of the vehicle door, and wherein the controlling means intermittently activates the luminous member when the controlling means detects the other of the detecting of the movement of the portable unit from inside of the vehicle compartment to outside of the vehicle compartment and the locking of the vehicle door.

It is preferable that the number of both the luminous member and the light guiding means disposed between the luminous member and the light decorative member are plural number, and the controlling means activates different luminous members depending on locking or unlocking of the vehicle door.

It is preferable that the luminous member includes plural luminous member having different properties, and the controlling means activates different luminous members depending on locking or unlocking of the vehicle door.

It is preferable that the luminous member includes two kinds of luminous members having different properties, the controlling means activates the luminous member having a first property when the controlling means detects one of the detecting of the user's intent for locking and the locking of the vehicle door, and wherein the controlling means activates the luminous member having a second property when the controlling means detects the other of one of the detecting of the user's intent for locking and the locking of the vehicle door.

It is preferable that the luminous member includes two kinds of luminous members having different properties, the controlling means activates the luminous member having a first property when the controlling means detects one of the detecting the user's intent for locking and the locking of the vehicle door, and wherein the controlling means activates the luminous member having a second property when the controlling means detects the other of the detecting the approach of the portable unit from outside of the vehicle and the unlocking of the vehicle door.

It is preferable that the iuminous member includes two kinds of luminous members having different properties, the controlling means activates the luminous member having a first property when the controlling means detects one of the detecting movement of the portable unit from inside of the vehicle compartment to outside of the vehicle compartment and locking of the vehicle door, the controlling means activates the luminous member having a second property when the controlling means detects the other the detecting movement of the portable unit from inside of the vehicle compartment to outside of the vehicle compartment and the locking of the vehicle door.

### BRIEF DESCRIPTION OF THE DRAWING FIGURES

The foregoing and additional features and property of the present invention will become more apparent from the following detailed description considered with reference to the accompanying drawing figures wherein:
FIG. 1(a) is a plane view viewed from A direction in the FIG. 3 according to a embodiment of the present invention;
FIG. 1(b) is a plane view viewed from front of the vehicle door in the FIG. 1(a);
FIG. 2 is a partial cross sectional view taken along the line B-B of FIG. 1(b);
FIG. 3 is a perspective view schematically illustrating a vehicle door according to the present invention;
FIG. 4 is a block diagram schematically illustrating a system configuration;
FIG. 5 is a block diagram schematically illustrating a system configuration;
FIG. 6 is a flow chart explaining locking control operation;
FIG. 7 is a flow chart explaining unlocking control operation; and
FIG. 8 is a partial cross sectional view according to another embodiment of the present invention.

### DETAILED DESCRIPTION OF THE INVENTION

A preferred embodiment of the present invention will be described hereinbelow in detail with reference to the accompanying drawings.

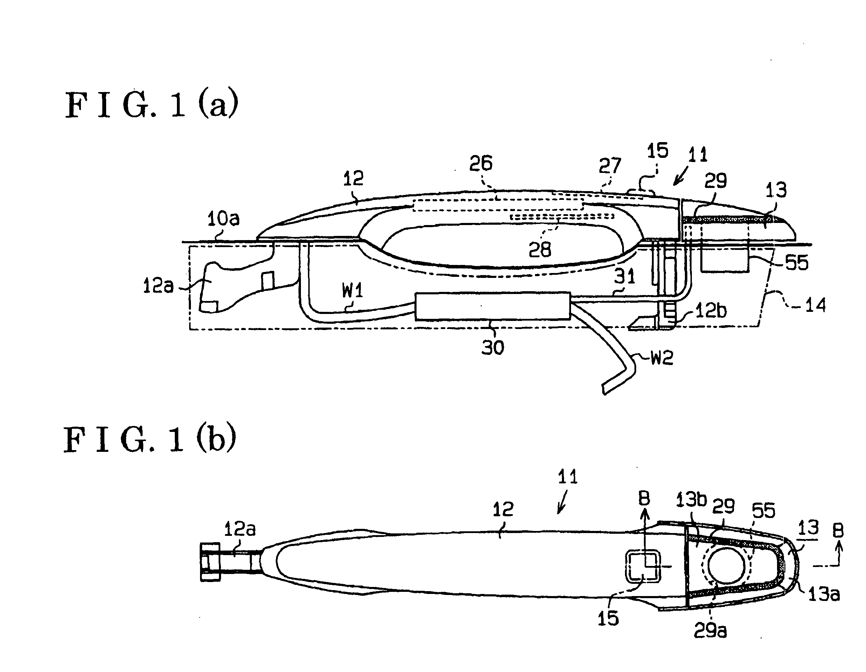

A first embodiment of the present invention is explained referring to FIGs. 1 to 7.

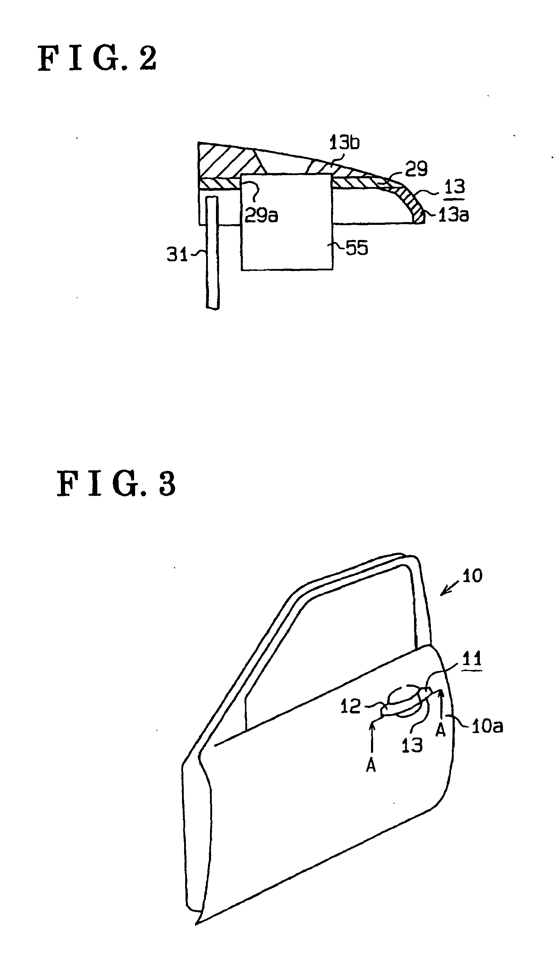

FIG. 3 is a perspective view of a vehicle door 10 to which the invention is applied. As shown in FIG. 3, an outside handle 11 is attached to the vehicle door 10. Namely, the outside handle 11 is attached to vehicle body at a rear side of a door outer panel 10a forming an outer profile of the vehicle door 10. The outside handle 11 includes both a handle member 12 for door opening and closing operation and a handle cap 13 covering a key cylinder to form a designed surface or a decorative surface. Both handle member 12 and the handle cap 13 are projecting outwardly from the door outer panel 10a. The handle member 12 is held by hand when a user manually conducts door opening and closing operation. Both the handle member 12 and the handle cap 13 are supported by a handle frame (see FIG. 1) with holding the door outer panel 10a between the handle frame and both the handle member 12 and the handle cap 13 as described later.

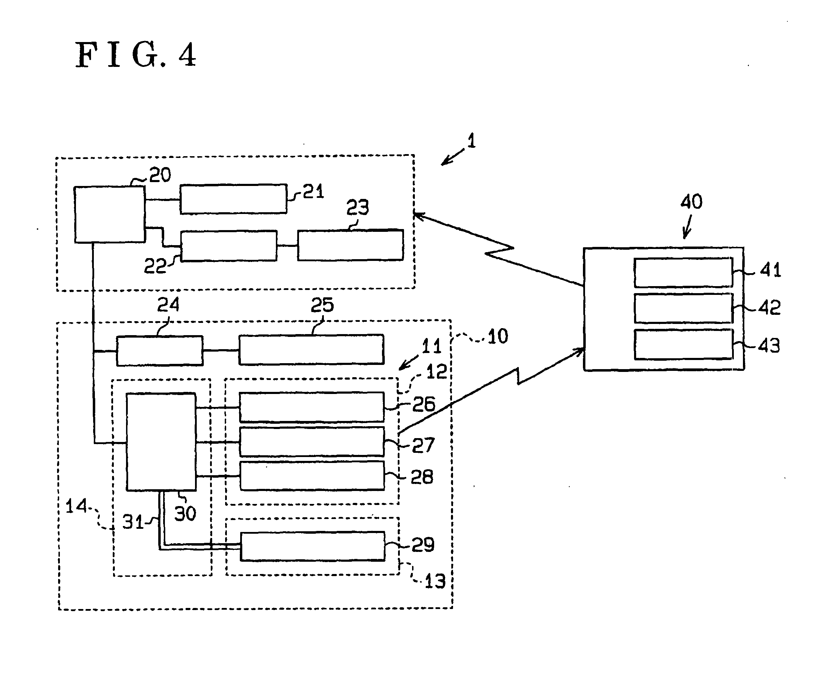

FIG. 4 is a system block diagram for a device equipped in the vehicle body (in-vehicle unit) composing a smart-entry system 1 as a door opening/closing device for the vehicle and a portable unit carried by the user. It is noted that the term "user" Includes an owner of the vehicle, a driver and a passenger of the vehicle to be operated.

As shown in FIG. 4, the smart-entry system 1 includes a system ECU (Electric Control Unit) 20 in the vehicle compartment inside, a receiving tuner 21 for receiving an electric wave from inside or outside the vehicle, a first driver 22 and a first transmitting antenna 23 for transmitting to inside of the vehicle compartment. The receiving tuner 21 is connected with the system ECU 20, in addition, the first transmitting antenna 23 is connected with the system ECU 20 through the first driver 22. The smart-entry system 1 includes a door ECU 24 and a door actuator 25 connected with the door ECU 24 in the vehicle door 10. The door ECU 24 is connected with the system ECU 20.

. As stated above, the outside handle 11 is attached to the vehicle door 10. The smart-entry system 1 includes a second transmitting antenna 26 for transmitting an electric wave to outside of the vehicle compartment, a door locking human detector 27 and a door unlocking human detector 28 in the handle member 12 of the outside handle 11. The smart-entry system 1 includes a light decorative member 29 formed by such as a light diffusive resin in the handle cap 13. The smart-entry system 1 includes a second driver 30 connected with the system ECU 20 in the handle frame. Each of the second transmitting antenna 26, the door locking human detector 27 and a door unlocking human detector 28 are connected with the system ECU 20 through the second driver 30. In addition, a luminous member (described later) 54 is disposed in the second driver 30. Corresponding to the luminous member 54, a light guiding means 31, such as optical fiber, connects between the second driver 30 and the light decorative member 29 of the handle cap 13. Then, a light emitted at the luminous member 54 in the second driver 30 is conducted into the light decorative member 29 through the light guiding member 31.

The system ECU 20 is composed by a digital computer, including a CPU (Central Processing Unit), ROM (Read Only Memory) storing various programs and maps and others, and RAM (Random Access Memory) which can read or write various data. The system ECU 20 controls locking/unlocking operation of the vehicle door 10 by driving the door actuator 25 through the door ECU 24 depending on transmitting and receiving of various data.

A portable unit 40 carried by the user includes a transmitting system 41, a receiving system 42 and a signal processing CPU 43 which control the transmitting system 41 and the receiving system 42 and process signals. The signal processing CPU 43 transmits an electric wave to the receiving tuner 21 by the transmitting system, herewith the signal processing CPU 43 receives an electric signal from the first transmitting antenna 23 or the second transmitting antenna 26 within the receivable area using receiving system 42.

Next, an operation of the smart-entry system 1 according to the first embodiment is explained below.
At first, a sequence of the operation is described at the time in which a user (or the portable unit 40 carried by the user) approaches from distant place to the vehicle for getting in the vehicle. In this situation, in order to identify the registered portable unit 40, the system ECU 20 drives the second driver 30, and the second transmitting antenna 26 connected with the second driver 30 transmits an electric wave (request signal) to outside of the vehicle. When the portable unit 40 is approaching to the vehicle, the portable unit 40 receives the request signal from the vehicle using the receiving system 42. Then, the transmitting system 41 of the portable unit 40 transmits an electric wave (response signal) including a registration code by signal processing of the signal processing CPU 43.

For the vehicle side, the response signal including the registration code is received at the receiving tuner 21, and is transmitted to the system ECU 20. Then, the system ECU 20 recognizes that the portable unit 40 is approaching to the vehicle by receiving the response signal.

The system ECU 20 changes to door unlock detection mode by detecting the user's intent for unlocking the vehicle door. The door unlocking human detector 28 is activated by the system ECU 20 through the second driver 30 in the door unlock detection mode. The door unlocking human detector 28 is disposed at backside (the door outer panel 10a side) of the handle member 12 (see FIG. 1) to detect a human body touch corresponding to vehicle door 10 opening operation (door unlock willing). The door unlocking human detector 28 is provided such as a capacitance type sensor system formed by sensor electrode.

In the door unlock detection mode, the luminous member 54 provided in the second driver 30 is activated to emit by system ECU 20 so that the user can recognize or confirm the user's vehicle. The light emitted at the luminous member 54 is conducted to the light decorative member 29 of the handle cap 13 through the light guiding member 31, then, the light decorative member 29 is turned on or colored. In this condition, the system ECU 20 continuously activates the luminous member 54 to turn on the light decorative member 29 while predetermined time. Accordingly, the user can visually recognize or confirm that the vehicle door 10 can be unlocked condition and ready for getting in the vehicle when the user holds the handle member 12.

When the user holds the handle member 12 at the above condition, a signal informing that the handle member 12 is contacting with a human body is transmitted from the door unlocking human detector 28 to the system ECU 20 through the second driver 30. After receiving the signal, the system ECU 20 transmits a door unlock signal to the door ECU 24. Then, the door actuator 25 is driven, and the vehicle door 10 is unlocked. The user can get in the vehicle with unlocking the vehicle door 10 in this way.

In addition, the system ECU 20 activates the luminous member 54 of the second driver 30 when the system ECU 20 receives the signal informing that the handle member 12 is contacting with a human body. The light emitted at the luminous member 54 is conducted to the light decorative member 29 of the handle cap 13 through the light guiding member 31, then, the light decorative member 29 is turned on or colored. In this condition, the system ECU 20 intermittently activates the luminous member to turn on the light decorative member 29 during a predetermined time period. Accordingly, the user can visually recognize or confirm that the vehicle door 10 is in unlocked condition and ready for getting in the vehicle when the user holds the handle member 12 again.

Next, operation of the smart-entry system 1 for that a user (with portable unit 40) gets off a vehicle is explained. The system ECU 20 detects that the registered portable unit 40 is placed at inside of the vehicle compartment when the receiving tuner 21 received the response signal from the portable unit 40. The response signal is a response to the request signal transmitted from the first transmitting antenna 23 to inside of the vehicle compartment. When the user opens the vehicle door and closes it after getting off the vehicle from above condition, the portable unit 40 fails to receive the request signal transmitted from the first antenna 23 through the first driver 22. Accordingly, the transmission of the response signal from the portable unit 40 is stopped, and then the system ECU 20 recognizes that the portable unit 40 is moved from the inside of the vehicle compartment to the outside, namely, the user got off the vehicle.

Subsequently, the system ECU 20 changes to a door lock detection mode. In this mode, the door locking human detector 27 is activated by the system ECU 20 through the second driver 30. The door locking human detector 27 is disposed at a backside of the handle member 12 (see FIG. 1) to detect a human body touch corresponding to a operation for vehicle door 10 dosing (door lock willing). The door locking human detector 27 is provided such as a capacitance type sensor system made formed by sensor electrode.

In the door lock detection mode, the luminous member 54 provided in the second driver 30 is activated to emit by system ECU 20 so that the user can recognize or confirm the user's vehicle state. The light emitted at the luminous member 54 is conducted to the light decorative member 29 of the handle cap 13 through the light guiding member 31, then, the light decorative member 29 is turned on or colored. In this condition, the system ECU 20 intermittently activates the luminous member 54 to turn on the light decorative member 29 while predetermined time. Accordingly, the user can visually recognize or confirm that the vehicle door 10 can be locked when the user holds the handle member 12.

When the user holds the handle member 12 at the above condition, a signal informing that the handle member 12 is contacting with a human body is transmitted from the door locking human detector 27 to the system ECU 20 through the second driver 30. The system ECU 20 activates the second driver 30, and transmits a request signal from the second transmitting antenna 26 to outside of the vehicle compartment after the system ECU 20 received the signal informing that the handle member 12 is contacting with a human body. At this time, the user holding the portable unit 40 remains to stay in close proximity to the vehicle. When the portable unit 40 received the request signal from the vehicle using the receiving system 42, a response signal, wherein a registration code is inserted by the signal processing CPU 43, is transmitted from the transmitting system 41 to the vehicle.

The registration code including the response signal is received by the receiving tuner 21, and is transmitted to the system ECU 20 in the vehicle side. The system ECU 20 transmits a door lock signal to the door ECU 24 after receiving the response signal. Then, the door actuator 25 is driven, and the vehicle door 10 is locked.

In addition, the system ECU 20 activates the luminous member 54 of the second driver 30 when the system ECU 20 receives the human detection signal. The light emitted at the luminous member 54 is conducted to the light decorative member 29 of the handle cap 13 through the light guiding member 31, then, the light decorative member 29 is turned on or colored. In this condition, the system ECU 20 continuously activates the luminous member 54 to turn on the light decorative member 29 during a predetermined time period. Accordingly, the user can visually recognize or confirm that the vehicle door 10 is in locked condition when the user holds the handle member 12 again. The user can go away from the vehicle at ease.

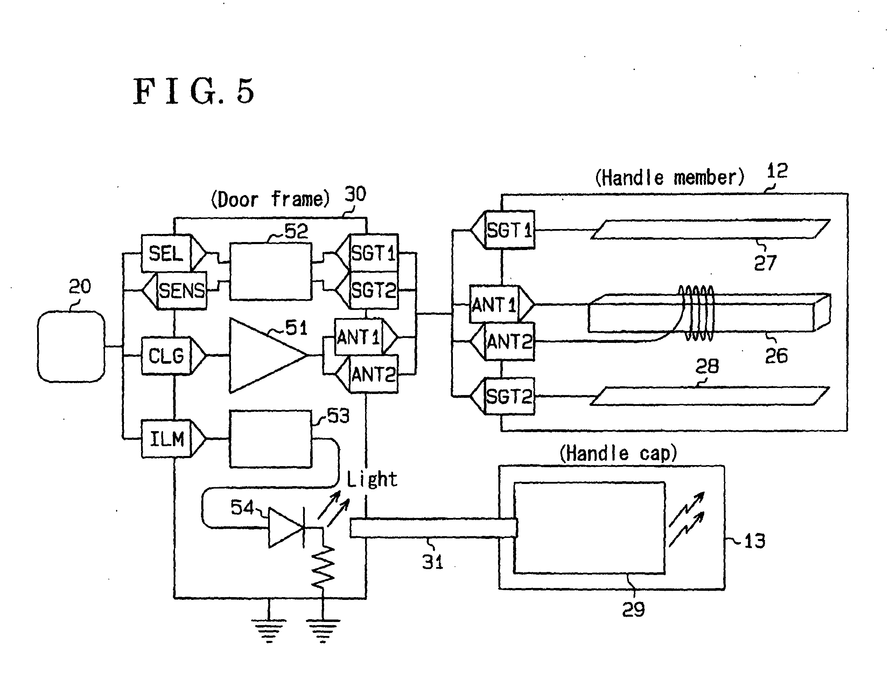

Next, correlation between the handle member 12, the handle cap 13 and the second driver 30 disposed in the handle frame 14 is explained referring to FIG. 5.
FIG. 5 shows a block diagram showing electrical/optical correlation between the second driver 30 connected with the system ECU 20 in the vehicle compartment and handle member 12 and the handle cap 13. The door locking human detector 27 and the door unlocking human detector 28 are disposed in the front side and back side of the handle member 12 with putting the second transmitting antenna 26 between them. The second driver 30 includes a transmitting amplifier 51, a human sensor driver 52, a luminescence driver 53 and a luminous member 54 activated by the luminescence driver 53. A high brightness LED (Light-Emitting Diode) and the like is used as the luminous member 54. The transmitting amplifier 51 in the second driver 30 is connected with the system ECU 20 via a CLG terminal, and is connected with the second transmission antenna 26 via an ANT1 terminal and an ANT2 terminal. The human sensor driver 52 is connected with the system ECU 20 via a SEL terminal and a SENS terminal, and is connected with the door locking human detector 27 and the door unlocking human detector 28 via a STG1 terminal and a STG2 terminal, respectively. The luminescence driver 53 is connected with the system ECU 20 via ILM terminal, and is connected with the luminous member 54. Corresponding to the luminous member 54, the light guiding means 31 connects between the second driver 30 and the light decorative member 29 of the handle cap 13.

The request signal generated at the system ECU 20 for transmitting to outside of the vehicle compartment is modulated and amplified at the transmitting amplifier 51 via CLG terminal of the second driver 30. The request signal is then transmitted to the second transmitting antenna 26 of the handle member 12 via the ANT1 terminal and the ANT2 terminal, and is transmitted to outside of the vehicle compartment.

The signal from the system ECU 20, which is outputted while the door lock detection mode or the door unlock detection mode, is transmitted to the SEL terminal, and then the human sensor driver 52 connected with the SEL terminal is activated. In the human sensor driver 52, both the door locking human detector 27 and the door unlocking human detector 28, which are connected via SGT1 terminal or SGT2 terminal, start detecting.

In the unlocking operation by the user, the user operates the handle member 12 by hand. The signal from the SGT2 terminal is changed with touching the backside of the handle member 12 placed close to the door unlocking human detector 28. This signal change is detected at the human sensor driver 52, and transmitted to the system ECU 20 via the SENS terminal.

On the other hand, in the locking operation by the user, the signal of the SGT1 terminal is changed with touching the front side of the handle member 12 placed close to the door locking human detector 27. This signal change is detected at the human sensor driver 52, and transmitted to the system ECU 20 via the SENS terminal.

According to each door locking/unlocking control, an activation signal is inputted from the system ECU 20 to the luminescence driver 53 via the ILM terminal. Then, the luminescence driver 53 is activated, and the luminous member 54 is turned on. A light emitted at the luminous member 54 is conducted into the light decorative member 29 of the handle cap 13 through the light guiding member 31, and the light decorative member 29 becomes lighting or blinking state as specified manner.

Next, the outside handle 11 and embedded parts are explained referring to FIG. 1 and FIG. 2. FIG.1(a) is a plane view viewed from A direction in the FIG. 3. FIG. 1(b) is a plane view viewed from orthogonal direction to the A direction or viewed from front of the vehicle door.

As shown is FIG. 1, the handle member 12 of the outside handle 11 and the handle cap 13 are provided at outer surface of the door outer panel 10a. The handle frame 14 is fixed to inner surface of the door outer panel 10a. The handle member 12 is pivotally connected with the handle frame 14 in a definite range. Namely, a hinge arm 12a and a stroke arm 12b are provided at one end of the handle member 12 (left side in FIG.1 and front side of the vehicle) and the other end of it (right side in FIG. 1 and rear side of the vehicle), respectively. The hinge arm 12a is pivotally attached to the handle frame 14 with penetrating the door outer panel 10a. The stroke arm 12b is engaged with the handle frame 14 with penetrating the door outer panel 10a, and the stroke arm 12b can rock in a definite range to the handle frame 14. Then, the handle member 12 is pivotally connected with the handle frame 14 wherein the hinge arm 12a plays a role of a pivot point and pivots in a range allowed by the stroke arm 12b.

The handle member 12 is formed as a hollow structure, and involved in the second transmitting antenna 26, which is placed between the door locking human detector 27 and the door unlocking human detector 28. The second transmitting antenna 26 is mechanically fixed to the inside of the handle member 12. The second transmitting antenna 26 forms a loop antenna structure with ferrite core and the like.

The door locking human detector 27 is disposed at the front face (the outside of the vehicle) of the handle member 12, and the door unlocking human detector 28 is disposed at backside (the door outer panel 10a side) of the handle member 12. Each door locking human detector 27 and door unlocking human detector 28 are mechanically fixed to the inside of the handle member 12.

The second transmitting antenna 26, the door locking human detector 27 and the door unlocking human detector are disposed in the handle member 12 with avoiding formation of pores. Then, durability of the handle member 12 is not affected by accommodating them.

On the other hand, a key cylinder 55 is provided at the handle frame 14 and next to the handle member 12 (right side in FIG. 1). Accordingly, the handle cap 13 is fixed to the handle frame 14 by attaching to the key cylinder 55.

FIG. 2 is a partial cross sectional view taken along the line B-B of FIG. 1(b). As shown in the figure, the handle cap 13 includes a base portion 13a and a cover portion 13b, and the light decorative member 29 is placed between the base portion 13a and the cover portion 13b. The light decorative member 29 is formed with a plate like shape having an opening portion 29a corresponding to the key cylinder 55. Then, the light decorative member 29 is positioned and attached to the key cylinder 55 by engaging the key cylinder 55 into the opening portion 29a. By means of that the cover portion 13b is attached to the light decorative member 29 supported as mentioned above, the light decorative member 29 is viewed as approximately U-shaped with opening the handle member 12 side.

The second driver 30 included in the handle frame 14 is connected with the second transmitting antenna 26 in the handle member 12, the door locking human detector 27 and the door unlocking human detector 28 through wire harness W1. The second driver 30 is connected with the system ECU 20. The light guiding means 31, wherein the one end is placed at luminous member 54 of the second driver 30, is conducted in the handle frame 14, and the other end is placed at light decorative member 29 of the door outer panel 10a side (backside). In the first embodiment, the other end of the light guiding means 31 is placed at the handle member 12 side (left side of FIG. 2) of the light decorative member 29. When the luminous member 54 is activated, a light is conducted into the light decorative member 29 through light guiding means 31. The incident light of the light decorative member 29 is diffused to the surface of it. Accordingly, the light decorative member 29 is turned on and colored with approximately U-shaped appearance. In this situation, light diffusion is inhibited to the minimum, and a shortage of light intensity is prevented since the light is conducted to the close position to the light decorative member 29. The user visibility from the outside of the vehicle is improved by turning on and coloring the light decorative member 29. Durability of the handle member 12 does not affected by the light decorative member 29 to increase the visibility of the vehicle door lock/unlock condition.

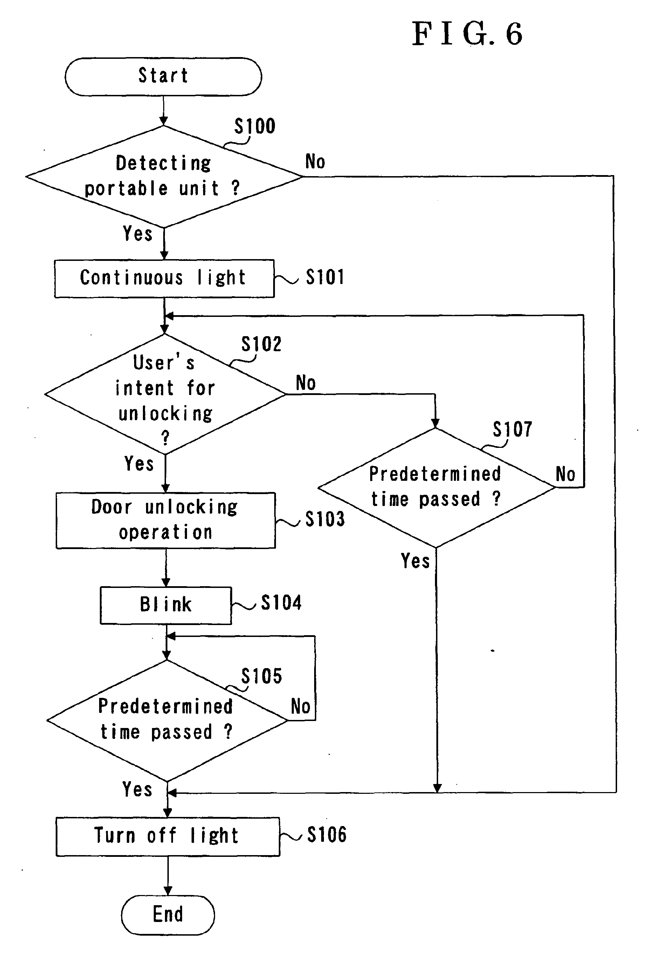

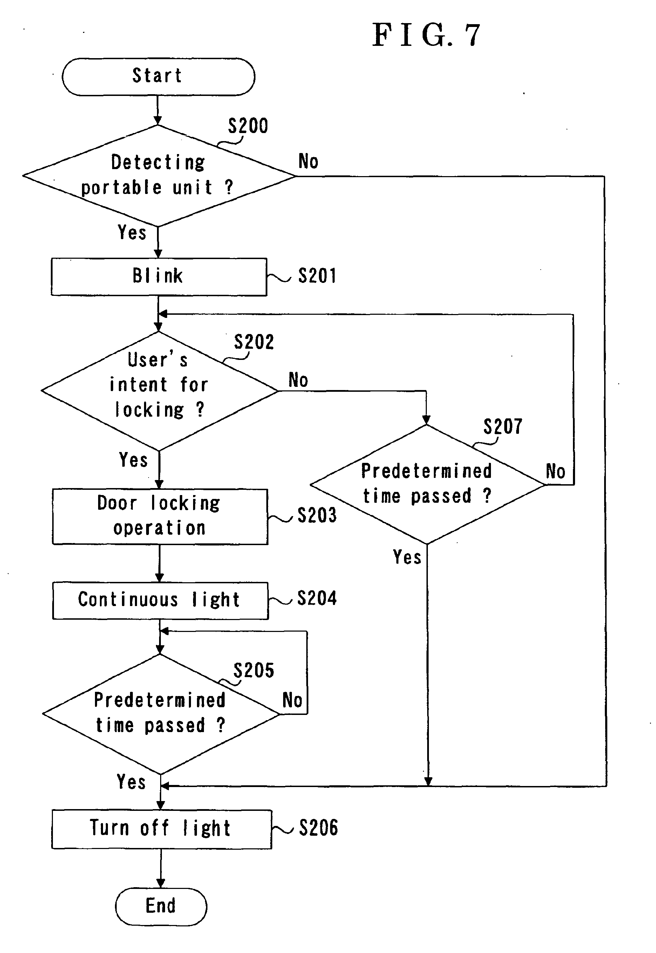

Next, general operation flow for opening/closing (unlocking/locking) control of the vehicle door is explained referring to FIG. 6 and FIG. 7.
FIG. 6 is a flowchart for explaining unlocking control operation of the vehicle door. Since starting the routine, the system ECU 20 judges at step S100 whether or not the portable unit 40 is close to the vehicle door. When the portable unit 40 is judged to be coming close thereto from the outside of the vehicle compartment, the process proceeds to step S101. Then the luminous member 54 lights up, and the light decorative member 29 of the handle cap 13 lights up.

At step S102, the system ECU judges whether or not the user's intent for unlocking the vehicle door 10. More particularly, the user's intent for unlocking the vehicle door 10 is judged based upon the signal from the door unlocking human detector 28 with touching the backside of the handle member 12 by hand. When the vehicle door is not judged to be unlocked at step S102, the system ECU 20 proceeds to step S107, wherein the system ECU judges whether or not a predetermined time period has passed since the portable unit 40 is detected. When the predetermined time period has not passed yet, the process returns to step S102. On the other hand, when the predetermined time period has already passed, the process proceeds to step S106.

When the vehicle door is judged to be unlocked at step S102, the system ECU 20 proceeds to step S103, wherein the system ECU 20 activates the door actuator 25 through the door ECU 24 and unlocks the vehicle door 10. At step S104, the luminous member 54 lights up, and the light decorative member 29 of the handle cap 13 blinks. At step S105, the system ECU 20 judges whether or not a predetermined time period has passed since the initial light-up of the luminous member 54 (blink of the light decorative member 29). When the predetermined time period is judged to have already passed at step S105, the process proceeds to step S106, wherein the luminous member 54 turns off and the light decorative member 29 also turns off. As descried above, the vehicle door unlock operation is performed according to the present invention.

On the other hand, FIG. 7 is a flowchart for explaining locking control operation of the vehicle door. Since starting the routine, the system ECU 20 judges at step S200 whether or not the portable unit 40 moved from inside of the vehicle to outside of the vehicle. When the portable station 40 is judged to have moved to outside of the vehicle, the process proceeds to step S201. At step S201, the luminous member 54 lights up and the light decorative member 29 blinks.

At step S202, the system ECU judges whether or not the user's intent for locking the vehicle door 10. More particularly, the user's intent for locking the vehicle door 10 is judged based upon the signal from the door locking human detector 27 with touching the front side of the handle member 12 by hand. When the vehicle door is not judged to be locked at step S202, the system ECU 20 proceeds to step S207, wherein the system ECU 20 judges whether or not a predetermined time period has passed since the portable unit 40 is detected. When the predetermined time period has not passed yet, the process returns to step S202. On the other hand, when the predetermined time period has already passed, the process proceeds to step S206.

When the vehicle door is judged to be locked at step S202, the system ECU 20 proceeds to step S203, wherein the system ECU 20 activates the door actuator 25 through the door ECU 24 and locks the vehicle door 10. At step S204, the luminous member 54 lights up, and the light decorative member 29 of the handle cap 13 lights up. At step S205, the system ECU 20 judges whether or not a predetermined time period has passed since the initial light-up of the luminous member 54 (light-up of the light decorative member 29). When the predetermined time period is judged to have already passed at step S205, the process proceeds to step S206, wherein the luminous member 54 turns off and the light decorative member 29 also turns off. As descried above, the vehicle door lock operation is performed according to the present invention.

As described above, according to the embodiment of the present invention, advantages to be obtained is described below.
1. According to the embodiment of the present invention, a light emitted at the luminous member 54 by the system ECU 20 is conducted into the light decorative member 29 disposed at the handle cap 13 through the light guiding means 31, and then the light decorative member 29 turns on. Since the handle cap 13 (the light decorative member 29) attracts user's attention when the user operates the handle member 12 to open/close the door, certainty for recognizing the locking/unlocking condition to the user can be improved. By informing the locking/unlocking condition of the vehicle door 10, a user friendly system can be made.
   Accordingly, the structure of the handle member 12, which is consistently operated by the user, is not subject to provide the luminous member. Then, high durability is attained even when the handle member 12 is functionalized as described in the present embodiment.
2. According to the embodiment of the present invention, lighting pattern (continuous lighting or blinking) of the light decorative member 29 is selectively changed when either the system ECU 20 detects approaching of the portable unit 40 from outside of the vehicle (door unlock detection mode) or the vehicle door 10 is unlocked. Thus, the user can easily confirm unlocking condition of the vehicle door 10.
3. According to the embodiment of the present invention, lighting pattern (continuous lighting or blinking) of the light decorative member 29 is selectively changed when either the system ECU 20 detects that the portable unit 40 is moved from inside of the vehicle to outside of the vehicle (door lock detection mode) or locking of the vehicle door 10. Thus, the user can easily recognizes the unlocking condition of the vehicle door 10.
4. According to the embodiment of the present invention, the locking/unlocking condition can be informed by day and night without using a special sensor such as photometer.
5. According to the embodiment of the present invention, the outside handle can be easy to assemble since the luminescence driver 53 and the luminous member 54 is integrally provided in the second driver 30 of the handle frame.

The embodiment related to the present invention is not qualified above embodiment. It can be changed as follows.

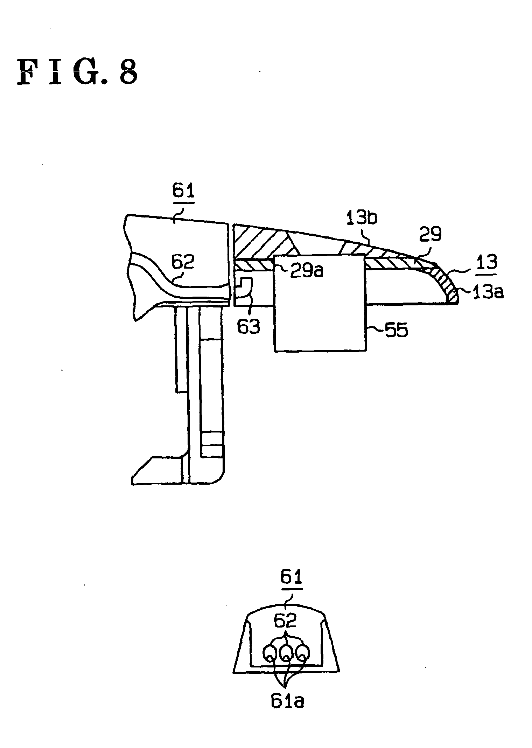

In the above embodiment, the light guiding means 31 can be provided as shown in FIG. 8. In this composition, a fitting hole 61a is formed at one side of a handle member 61 of the outside handle (right side of FIG. 8) opposed to the handle cap 13. The one end of a light guiding means 62 is placed corresponding to the luminous member 54 of the second driver 30. The other end of the light guiding means 62 is inserted into the fitting hole 61 a, and the edge of the light guiding means 62 is exposed toward the handle cap 13. On the other hand, in the handle cap 13, a light guiding means 53 is provided, wherein the one end of the light guiding means 63 is placed opposite to the edge of the light guiding means, and the other end of the light guiding means 63 is placed at the door outer panel 10a side (back side) of the light guiding means 29. Accordingly, light emitted at the luminous member 54 is conducted to the other end of the light guiding means 62 in the handle member 12, in addition, the light at the edge of the light guiding means 62 is conducted to the handle cap (light decorative member 29) through the light guiding means 63. Place of the light guiding means 31 between the luminous member 54 and the light decorative member 29 can be changed to arbitrary place. The same effect is obtained if the light guiding member 63 is changed to such a configuration.

The structure of the second transmitting antenna 26 is an example. Other type of antenna may be used if the antenna is available in the frequency band used. In addition, the second transmitting antenna 26 may not be disposed in the handle member 12 if the second transmitting antenna 26 is transmittable to outside of the vehicle.

The door locking human detector 27 or the door unlocking human detector 28 may be changed to other means such as ON-OFF operating switch in place of the capacitance type sensor system. The point of the present invention is to detect an operation giving a sign for user's intent for door locking/unlocking operation (operation of the handle member 12).

The light decorative member 29 may blinks when the system ECU 20 detects that the portable unit 40 is coming close thereto from outside of the vehicle (door unlock detection mode). Correspondingly, the light decorative member 29 may continuously turn on when the vehicle door is unlocked.

The light decorative member 29 may continuously turn on when the system ECU 20 detects that the portable unit 40 is moved from inside of the vehicle to outside of the vehicle (door lock detection mode). Correspondingly, the light decorative member 29 may blinks when the vehicle door is locked.

Lighting method of the light decorative member 29 may change either continuous light or intermittent light according to either detection of user's intent for locking or locking operation of the vehicle door 10.

Lighting or blinking pattern of the light decorative member 29 (luminous member 54) is an example. Any lighting or blinking pattern may be adopted, for example, lengthy blinking, short blinking or their combination. The point is that the user can certainly confirm the door locking/unlocking condition or its control condition according to lighting or blinking pattern of the light decorative member 29.

Lighting or bunking pattern of the light decorative member 29 may changed by not only above described method but also coloring. Specifically, plural luminous members having some different coloring (emission) properties may be included in the second driver 30. Accordingly, coloring of the light decorative member is changed by selectively activating plural luminous members according to the door locking/unlocking condition. The user can certainly detects the door locking/unlocking condition by lighting/coloring variation of the light decorative member 29. Additionally, light intensity may be changed for light decorative member 29.

For example, the light decorative member 29 may be illuminated with different lighting property depending on locking or unlocking of the vehicle door. In this condition, the user can distinguish between locking and unlocking condition of the vehicle door.

Additionally, two or more luminous members having different property (color of light, light intensity) may be used. When the light decorative member 29 is illuminated with some different property (color of light, light intensity) depending either on detection of the vehicle door to be locked or locking of the vehicle door, the user can easily detects locking condition of the vehicle door.

Additionally, when the light decorative member 29 is illuminated with some different property (color of light, light intensity) depending on either detection of the portable unit 40 coming close thereto from outside of the vehicle or unlocking of the vehicle door, the user can easily detects unlocking condition of the vehicle door.

Additionally, when the light decorative member 29 is illuminated with some different property (color of light, light intensity) depending on either detection of the portable unit 40 moved from inside of the vehicle to outside of the vehicle or locking of the vehicle door, the user can easily detects locking condition of the vehicle door.

In the above embodiment, each the light guiding means 52 and the luminous member 54 may be composed of not only one but also plural number. For example, when plural light guiding means are provided corresponding to each luminous member, the luminous member may be switched according to controlling condition of door locking or unlocking. More particularly, when a given luminous member is activated by the system ECU 20, the light from the luminous member is conducted to the light decorative member 29 through corresponding light guiding member, and then the light decorative member 29 lights up at the corresponding position to the light guiding member. As described here, the user can easily detects locking or unlocking of the vehicle door by illuminating the light decorative member at different position, which depends on locking or unlocking operation of the vehicle door.

The handle cap 13 may be provided not only backside of the handle member 12 but also other place, if it is easy viewable from a vehicle outside user within acceptable design.

The handle cap 13 may be provided not only corresponding to the key cylinder 55 but also other place. In addition, the key cylinder 55 is not necessary to attach to the vehicle door 10 (or the outside handle 11).

The handle cap 13 is fixed to the handle frame 14 with attaching to the key cylinder 55. On the contrary, the handle cap may be directly attached with the handle frame 14 by transfixing to the door outer panel 10a.

The light decorative member 29 is provided at the handle cap 13 wherein the light decorative member is sandwiched between the base portion 13a and the cover portion 13b. On the contrary, the light decorative member may be integrally formed with the handle cap 13.

The light decorative member 29 may be formed using not only a light diffusive resin but also a transparent or a translucent material (such as acrylic resin). Accordingly, a combination of light diffusive resin, transparent resin and translucent resin may be available.

The handle member 12 may be made of any materials such as resin painting material, resin coating material, metal and so on. The point is that the shape and the material do not affect the specification of the second transmitting antenna 26, the door locking human detector 27 and the door unlocking human detector 28.

The layout of each the second transmitting antenna 26, the door locking human detector 27 and the door unlocking human detector 28 in the handle member 12 is an example. The layout may be changed appropriately.

The request signal is transmitted from the second transmitting antenna 26. On the contrary, the portable unit 40 may transmit a request signal, and the second transmitting antenna 26 may a response signal corresponding with the request signal.

The handle member (movable portion) of the outside handle 11 may be formed as either a grip handle type or a pull handle type.

The principles, a preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

A door opening/dosing device for vehicle including a controlling means for controlling a vehicle door locking or unlocking operation by confirming a user's intent for locking or unlocking operation of the vehicle door includes a handle frame provided at the vehicle door, a handle member provided outside of the vehicle door and supported by the handle frame for operating opening or closing of the vehicle door, a handle cap provided outside the vehicle door and supported with the handle frame, a light decorative member provided at the handle cap, a luminous member accommodated in the handle frame and activated by the controlling means in response to the locking or unlocking condition of the vehicle door, and a light guiding means connecting the light decorative member and the luminous member.

## Claims

1. A door opening/closing device for vehicle including a controlling means (20) for controlling a vehicle door locking or unlocking operation by detecting a user's intent for locking or unlocking operation of the vehicie door, comprising:
a handle frame (14) disposed at the vehicle door (10);
a handle member (12) disposed at outside of the vehicle door (10) and supported by the handle frame (14) for operating opening or closing of the vehicle door (10);
a handle cap (13) disposed at outside the vehicle door (10) and supported with the handle frame (14);
a light decorative member (29) disposed at the handle cap (13);
a luminous member (54) disposed at the handle frame (14) and activated by the controlling means (20) in response to the locking or unlocking condition of the vehicle door (10) and emitted light; and
a light guiding means (31) disposed between the light decorative member (29) and the luminous member (54) and conducted the light activated by the controlling means (20) from the luminous member (54) to the light decorate member (29).

2. A door opening/closing device for vehicle according to claim 1, further comprising a detecting means included in the controlling means (20) for detecting a portable unit (40) by communicating with the portable unit (40);
**characterized in that** the controlling means (20) detects the user's intent for unlocking the vehicle door (10) in response to the operation of the handle member (12) by the user under a recognized condition that the portable unit (40) approaches to the vehicle from outside of a vehicle compartment, and detects the user's intent for locking the vehicle door (10) in response to the operation of the handle member (12) under a recognized condition that the portable unit (40) moves away from the inside of the vehicle compartment to outside of the vehicle.

3. A door opening/closing device for vehicle according to claim 2, further comprising a sensor electrode (27, 28) provided at the handle member (12) for detecting a touch of a user's body,
**characterized in that** the controlling means (20) detects the operation of the handle member (12) with a condition that the sensor electrode (27, 28) detects the touching of a human body.

4. A door opening/closing device for vehicle according to claim 2, further comprising an operation switch provided at the handle member (12),
**characterized in that** the controlling means (20) detects the operation of the handle member (12) with an operation of the operation switch.

5. A door opening/closing device for vehicle according to claim 1-4, **characterized in that** the controlling means (20) continuously activates the luminous member (54) when the controlling means (20) detects one of the detecting of the user's intent for locking and the locking of the vehicle door (12), and intermittently activates the luminous member (54) when the controlling means detects the other of the detecting of the user's intent for locking and the locking of the vehicle door (12).

6. A door opening/closing device for vehicle according to claim 2-4, **characterized in that** the controlling means (20) continuously activates the luminous member (54) when the controlling means detects one of the detecting of an approach of the portable unit (40) from outside of the vehicle and the unlocking of the vehicle door (12), and wherein the controlling means (20) intermittently activates the luminous member (54) when the controlling means (20) detects the other of the detecting of the approach of the portable unit (40) from outside of the vehicle and the unlocking of the vehicle door (12).

7. A door opening/closing device for vehicle according to claim 2-4, **characterized in that** the controlling means (20) continuously activates the luminous member (54) when the controlling means detects one of the detecting of an movement of the portable unit (40) from inside of the vehicle compartment to outside of the vehicle and the locking of the vehicle door (12), and wherein the controlling means (20) intermittently activates the luminous member (54) when the controlling means detects the other of the detecting of the movement of the portable unit (40) from inside of the vehicle compartment to outside of the vehicle compartment and the locking of the vehicle door (12).

8. A door opening/closing device for vehicle according to claim 1-4, **characterized in that** the number of both the luminous member (54) and the light guiding means (31) connecting the luminous member (54) and the light decorative member (29) are plural number, and the controlling means (20) activates different luminous members (54) depending on locking or unlocking of the vehicle door (12).

9. A door opening/closing device for vehicle according to claim 1-4, **characterized in that** the luminous member (54) includes plural luminous member (54) having different properties, and the controlling means (20) activates different luminous members (54) depending on locking or unlocking of the vehicle door (12).

10. A door opening/closing device for vehicle according to claim 1-4, **characterized in that** the luminous member (54) includes two kinds of luminous. members (54) having different properties, the controlling means (20) activates the luminous member (54) having a first property when the controlling means (20) detects one of the detecting of the user's intent for locking and the locking of the vehicle door (12), and wherein the controlling means (20) activates the luminous member (54) having a second property when the controlling means (20) detects the other of one of the detecting of the user's intent for locking and the locking of the vehicle door (12).

11. A door opening/closing device for vehicle according to claim 2-4, **characterized in that** the luminous member (54) includes two kinds of luminous members (54) having different properties, the controlling means (20) activates the luminous member (54) having a first property when the controlling means (20) detects one of the detecting the user's intent for locking and the locking of the vehicle door (12), and wherein the controlling means (20) activates the luminous member (54) having a second property when the controlling means (20) detects the other of the detecting the approach of the portable unit (40) from outside of the vehicle and the unlocking of the vehicle door (40).

12. A door opening/closing device for vehicle according to claim 2-4, **characterized in that** the luminous member (54) includes two kinds of luminous members (54) having different properties, the controlling means (20) activates the luminous member (54) having a first property when the controlling means (20) detects one of the detecting movement of the portable unit (40) from inside of the vehicle compartment to outside of the vehicle compartment and locking of the vehicle door (12), the controlling means (20) activates the luminous member (54) having a second property when the controlling means (20) detects the other the detecting movement of the portable unit (40) from inside of the vehicle compartment to outside of the vehicle compartment and the locking of the vehicle door (12).
